# EUROPÄISCHE PATENTANMELDUNG

(11) **EP 1 148 742 A1**
(43) Veröffentlichungstag der Anmeldung: **24.10.2001**
(21) Anmeldenummer: 00108572.9
(22) Anmeldetag: 19.04.2000
(51) Int. Cl.: H04Q 3/00, H04L 12/24

(54) **Verfahren und Managementsystem zum Behandeln von Ereignis-Berichten in einem Telekommunikationsnetz**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung bezieht sich auf ein Verfahren und ein Managementsystem zum Behandeln von Korrelationen zwischen Ereignis-Berichten in einem Funk-Telekommunikationsnetz, bei dem von einem Manager Ereignis-Berichte (ER(N;Cs)) empfangen werden. Jeder Ereignis-Bericht (ER(N;Cs)) hat eine eindeutige Identifizierungskennzeichnung (N). Optional können den Ereignis-Berichten (ER(N;Cs)) eine oder mehrere Korrelations-Identifizierungskennzeichnung(en), insbesondere Identifizierungsnummer(n) (C), zugewiesen sein, wobei die Korrelations-Identifizierungskennzeichnung(en) (C) eines solchen Nach-Ereignis-Berichtes ER(N;C,A1,A2) jeweils auf die Identifizierungskennzeichnung (N) eines Ereignis-Berichtes verweist(en), auf den/die der Ereignis-Bericht ER(N;Cs) mit der/den Korrelations-Identifizierungskennzeichnung(en) bezogen ist. Um dem Manager eine korrekte Korrelation zwischen Ereignis-Berichten zu ermöglichen, wenn korrelierte Nach-Ereignis-Berichte zuerst empfangen werden und der diesem zugrundeliegende Ur-Ereignis-Bericht erst später vom Manager empfangen wird, wird vorgeschlagen, dass ein solcher empfangener Nach-Ereignis-Bericht mit zumindest einer zugewiesenen Korrelations-Identifizierungskennzeichnung, zu welcher der zugrundeliegende Ereignis-Bericht noch nicht empfangen wurde, zwischengespeichert wird.

## Beschreibung

Die Erfindung betrifft ein Verfahren zum Behandeln von Korrelationen zwischen Ereignisberichten in einem Telekommunikationsnetz gemäß den oberbegrifflichen Merkmalen des Patentanspruchs 1 und ein Kommunikationssystem zum Ausführen dieses Verfahrens.

In einem Telekommunikationsnetz, z.B. einem Mobilfunknetz gemäß dem GSM- oder dem UMTS-Standard (GSM: Global System for Mobile Communication, UMTS: Universal Mobile Telecommunication System), erfolgt die Netzüberwachung und -kontrolle mit Hilfe von Management-Systemen, die sich z.B. auf der Netzelement-Managementebene oder der Netz-Managementebene befinden können.

Die Prinzipien eines Managementnetzes, die auch als TMN-Prinzipien (TMN: Telecommunications Management Network) bezeichnet werden, definieren Managementebenen für das Management eines Kommunikationssystems. Jede managende Ebene hat eine Manager-Funktion für die darunterliegende Ebene. Jede Ebene im gemanagten System hat entsprechend eine Agenten-Funktion für die nächsthöhere Ebene.

Das Fehlermanagement ("Fault Management") ist ein wichtiger Teil des TMN-Managements. In der Regel spielen die Netzelemente selbst, die in einer TMN- bzw. Telekommunikations-Managementnetz-Hierarchie die Agent-Rolle übernehmen, die aktive Rolle, indem sie relevante Ereignisse (events) im Netz, insbesondere Fehler-Ereignisse der eigenen Managementebene rechtzeitig und genau erkennen. Zu erkannten Ereignissen erzeugen die Agenten "Notifications" bzw. Benachrichtigungen, die sie dann schnellst möglich als Ereignisberichte bzw. sogenannte "event reports" (z.B. alarm reports) an den Manager der nächsthöheren Ebene übertragen, um so ein effizientes Netzmanagement zu ermöglichen.

In täglichem Betrieb eines Telekommunikations-Netzes entsteht eine große Anzahl von Ereignissen und dazugehörigen Ereignisberichten z.B. Alarmen (alarm reports), Zustandsänderungen (state change event reports) und Konfigurationsänderungen (attribute value change reports), die oft voneinander abhängig sind. Um eine effiziente Netzüberwachung zu erreichen, müssen die entsprechenden Ereignis-Berichte in den Netzelementen so korreliert werden, dass diese Berichte die Abhängigkeiten zwischen Ereignissen widerspiegeln. Nur so können das Überwachungspersonal bzw. der Operator die reale Ursache einer Sequenz von Ereignissen erkennen und konkrete Schritte z.B. zur Fehlerbehebung einleiten.

Für die Korrelation von Ereignissen, haben folgende Parameter eines derzeit üblichen Ereignis-Berichtes eine besondere Bedeutung:
a) Der Parameter "Notification Identifier" bzw. Benachrichtigungs-Identifizierungsnummer kennzeichnet einen Ereignis-Bericht in einem Managementkontext in eindeutiger Weise.
b) Der Parameter "Correlated Notifications" bzw. korrelierte Benachrichtigungen wird für die Korrelation zwischen Ereignis-Berichten verwendet. Wenn dieser Parameter in einem Ereignis-Bericht verwendet wird, enthält er eine oder mehrere Referenzen zu anderen Ereignis-Berichten, die vorher vom Agenten generiert worden sind.

Zur Erhöhung der Klarheit werden hier die folgenden Bezeichnungen verwendet:
Ein "Ur-Ereignis-Bericht" meldet ein Ereignis im Telekommunikationsnetz, das von anderen Ereignissen unabhängig ist. Ein solches Ur-Ereignis kann z.B. ein Hardwarefehler sein. In einem solchen Vor- bzw. Ur-Ereignis-Bericht ist der Parameter "Correlated notifications" leer bzw. nicht benutzt.

Ein "Nach-Ereignis-Bericht" informiert den Manager über ein Ereignis, das als Folge eines vorherigen Ur-Ereignis-Berichtes entstanden ist. Ein solcher Nach-Ereignis-Bericht kann z.B. eine Zustandsänderung einer funktionalen Objektinstanz nach einem vorherigen Hardwarefehler sein. In einem solchen Ereignis-Bericht enthält der Parameter "Correlated notifications" normalerweise den Wert des Parameters "Notification Identifier" des entsprechenden Ur-Ereignis-Berichtes.

Wenn sich der Nach-Ereignis-Bericht auf eine andere Objektinstanz als der Ur-Ereignis-Bericht bezieht, enthält der Parameter "Correlated notifications" zusätzlich den Namen der Objektinstanz aus dem Ur-Ereignis-Bericht.

Allgemein wird in verschiedenen ITU-T-Standards nur der "normale" Fall berücksichtigt, der nachfolgend als "Rückwärts-Korrelation" bezeichnet wird. Dabei wird zuerst ein Ur-Ereignis-Bericht vom Manager empfangen, wobei der Ur-Ereignis-Bericht z.B. den Parameter "Notification Identifier" = A und den Parameter "Correlated Notifications" unbenutzt bzw. leer aufweist.

Erst danach werden einer oder auch mehrere Nach-Ur-Ereignis-Berichte mit dem Parameter "Correlated notifications" = A empfangen, d.h. der Manager kann den neuen mit dem vorherigen, schon bekannten Ereignis-Bericht korrelieren.

Mit anderen Worten, wird in den ITU-T-Standards davon ausgegangen, dass die Reihenfolge der vom Manager empfangenen Ereignis-Berichte mit der Reihenfolge der vom Agent gesendeten Ereignis-Berichte identisch ist.

In der Praxis kann es aber z.B. abhängig vom Warteschlangen-bzw. Queueing-Abarbeiten oder von Verarbeitungsverfahren von verschiedenen Benachrichtigungen / Ereignis-Berichten im Agent bzw. Manager vorkommen, dass ein Manager zuerst Nach-Ereignis-Berichte und erst danach den dazu gehörenden Ur-Ereignis-Bericht empfängt, obwohl der Ur-Ereignis-Bericht als erster vom Agent generiert bzw. abgesendet wurde.

Ein solcher Fall wird nachfolgend als "Vorwärts-Korrelation" genannt. Eine solche "Vorwärts-Korrelation" ist bislang von den ITU-T-Standards nicht vorgesehen. Wenn ein solcher Fall eintrifft, geht der Manager üblicherweise von einem Fehler im Agent aus. Als Folge dessen wird die Korrelations-Information aus dem Nach-Ereignis-Bericht vom Manager ignoriert.

Die Aufgabe der Erfindung besteht darin, ein Verfahren vorzuschlagen, das dem Manager eine korrekte Korrelation zwischen Ereignis-Berichten ermöglicht, und zwar auch dann, wenn korrelierte Nach-Ereignis-Berichte zuerst empfangen werden und der ursprüngliche Ur-Ereignis-Bericht erst später vom Manager empfangen wird. Außerdem soll ein Managementsystem vorgeschlagen werden, das die Ausführung eines solchen Verfahrens ermöglicht.

Diese Aufgabe wird durch das Verfahren mit den Merkmalen des Patentanspruchs 1 bzw. das Managementsystem für Telekommunikationssysteme gemäß den Merkmalen des Patentanspruchs 11 gelöst.

Das Verfahren ermöglicht eine vollständige Auswertung der Korrelation zwischen Ereignis-Berichten, und zwar unabhängig von der Übereinstimmung der Sende- und Empfangsreihenfolge im Agent bzw. Manager. Der Verlust von abhängigen Ereignis-Informationen, die über einen schnelleren, kürzeren oder höher priorisierten Weg gelaufen sind, kann somit vermieden werden.

Vorteilhafte Ausgestaltungen sind Gegenstand von abhängigen Ansprüchen.

Dass die Managereinrichtung vor dem Abspeichern untersucht, ob der empfangene Ereignis-Bericht ein Ur- bzw. Vor-Ereignis-Bericht oder ein Nach-Ereignis-Bericht ist hat den Vorteil, Vor-Ereignis-Berichte in bekannter Weise zügig abarbeiten zu können. Die Managereinrichtung muß nachfolgend nur noch empfangene Nach-Ereignis-Berichte in einem Korrelationspuffer speichern.

Dass die Managereinrichtung alternativ empfangene Vor- und Nach-Ereignis-Berichte in einem Korrelationspuffer speichert, bietet den Vorteil insgesamt weniger Abfragen durchführen zu müssen. Außerdem können vorzugsweise alle Ereignisberichte in einem einzigen Speicher abgespeichert werden. Entsprechend untersucht die Managereinrichtung vorteilhafterweise erst nachfolgend, ob der empfangene Ereignis-Bericht ein Vor-Ereignis-Bericht oder ein Nach-Ereignis-Bericht ist.

Dass die Managereinrichtung die zugewiesene Korrelations-Identifizierungskennzeichnung auswertet und insbesondere die darin enthaltenen Benachrichtigungs-Identifizierungskennzeichnungswerte von zugeordneten Vor-Ereignis-Berichten abspeichert, ermöglicht den Aufbau in einer Tabelle oder Liste, die datenbanktechnisch besonders rationell verwaltbar ist. Nachfolgend kann eine übliche Auswertung erfolgen, falls der Ereignis-Bericht ein Nach-Ereignis-Bericht ist, zu dem zumindest ein zugrundeliegender Vor-Ereignis-Bericht vorliegt, oder direkt ein Vor-Ereignis-Bericht ist.

Sinnvollerweise erfolgt die Auswertung für den Nach-Ereignis-Bericht zu allen zugrundeliegenden Vor-Ereignis-Berichten, bevor der Nach-Ereignis-Bericht wieder aus dem Speicher gelöscht wird.

Vorteilhafterweise wird ein gespeicherter Nach-Ereignis-Bericht in jedem Fall nach Ablauf einer vorbestimmbaren Speicherdauer freigegeben oder gelöscht, so dass ein Überlaufen oder ein Überdimensionieren des Speichers vermeidbar ist.

Ein Ausführungsbeispiel wird nachfolgend anhand der Zeichnung näher erläutert. Es zeigen:
- Fig. 1: schematisch den Aufbau eines bekannten GSM-Funk-Kommunikationssystems;
- Fig. 2: schematisch den Benachrichtigungsablauf von einem Ereignis im Agentbereich und die entsprechende Meldung an den Manager;
- Fig. 3: ein Ablaufdiagramm für ein Verfahren zur Vorwärts-korrelation;
- Fig. 4: ein Ablaufdiagramm für ein Verfahren zur Vorwärts-korrelation gemäß einer modifizierten Ausführungsform und
- Fig. 5A-F: schematisch einen beispielhaften Speicher- und Bearbeitungszustand im Manager.

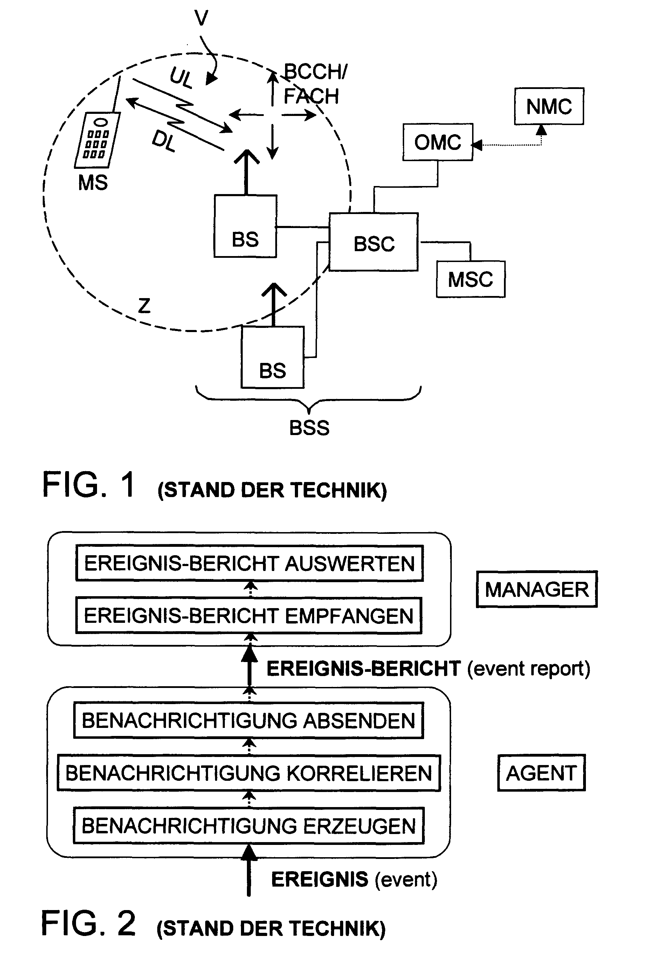

Wie aus Fig. 1 ersichtlich, weist ein beispielhaftes Funk-Kommunikationssystem eine Vielzahl von Funk-, Steuer- und Verwaltungseinrichtungen auf und besteht zumeist aus einer Vielzahl von Mobilvermittlungsstellen MSC, die untereinander vernetzt sind bzw. den Zugang zu einem Festnetz herstellen. Weiterhin sind diese Mobilvermittlungsstellen MSC mit jeweils zumindest einer Einrichtung BSC zum Zuteilen von funktechnischen Ressourcen verbunden. Jede dieser Einrichtungen BSC ermöglicht wiederum eine Verbindung zu zumindest einer Basisstation BS und bildet so ein Basisstationssystem BSS aus. Eine solche Basisstation BS kann über eine Funkschnittstelle Z eine Verbindung zu Teilnehmerstationen, z.B. mobilen Stationen MS oder anderweitigen mobilen und stationären Endgeräten aufbauen. Durch jede Basisstation BS wird zumindest eine Funkzelle Z gebildet.

Ein Bedienungs- und Wartungszentrum OMC realisiert Kontroll- und Wartungsfunktionen für das Mobilfunksystem bzw. für Teile davon. Zum Management des Netzes gibt es verschiedene Managementeinrichtungen und Managementebenen. Die Netzelement-Managementebene wird z.B. durch das Bedienungs- und Wartungszentrum (OMC: Operation and Maintanance Center) und Element-Manager verwaltet während die Netz-Managementebene z.B. durch das übergeordnete Netzmanagementzentrum NMC bzw. den Netz-Manager verwaltet wird.

Die Funktionalität dieser Struktur ist auf andere Kommunikationssysteme und Funk-Kommunikationssysteme übertragbar, insbesondere auch auf Teilnehmerzugangsnetze mit drahtlosem Teilnehmeranschluß.

Wie aus Fig. 2 ersichtlich, wird z.B. im Fall des Eintritts eines Ereignisses auf Hardwareebene ein entsprechendes Signal an den zuständigen Agent geleitet. Dieser erzeugt daraufhin eine Nachricht und sendet diese als Ereignis-Bericht ER(N;Cs) an den Manager. Ist das Ereignis ein Folgeereignis zu einem oder mehreren zuvor eingetretenen Ereignissen, zu dem bereits eine Nachricht an den Manager gesendet wurde, so wird die spätere Nachricht entsprechend korreliert. Das heißt, vor dem Absenden eines Ereignis-Berichtes ER(i;j) werden in das Feld des Parameters C "Correlated Notifications" bzw. korrelierte Benachrichtigungen die Benachrichtigungs-Identifizierungsnummern N der früheren Ereignis-Berichte ER(N;Cs) eingetragen.

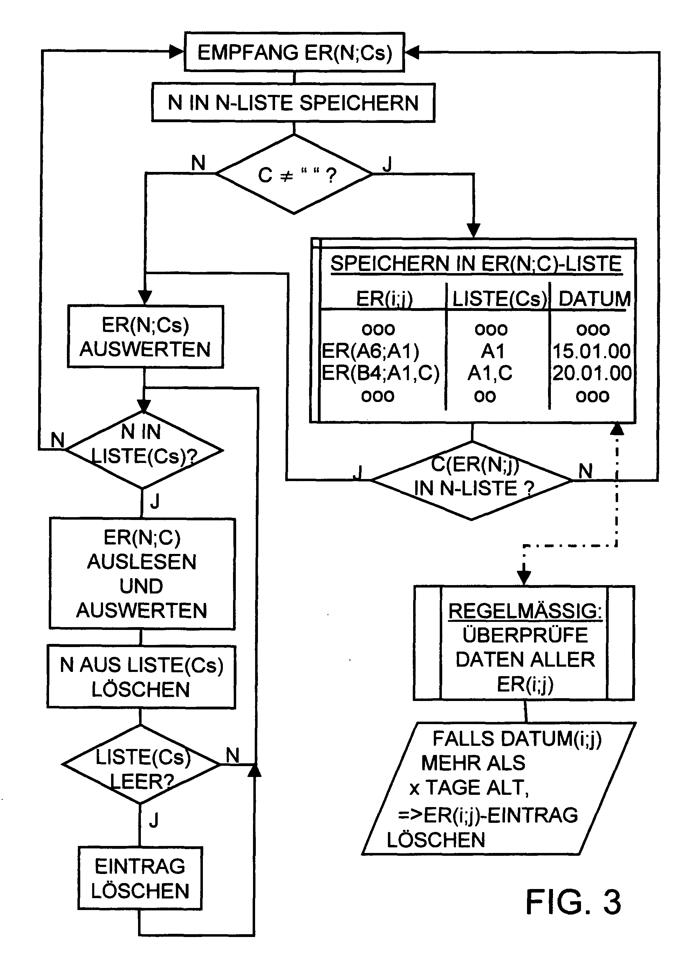

Ein bevorzugtes Verfahren zum Durchführen einer "Vorwärts-Korrelation" besteht aus folgenden Schritten, die auch anhand Fig. 3 veranschaulicht sind:
In einem einleitenden Verfahrensschritt empfängt der Manager einen Ereignis-Bericht ER(N;Cs). Der Ereignis-Bericht ER(N;Cs) weist die Parameter N für die eigene eindeutige Benachrichtigungs-Identifizierungsnummer und C für Benachrichtigungs-Identifizierungsnummern N von korrelierten früheren Ereignis-Berichten auf.

Der Parameter N für die eigene eindeutige Benachrichtigungs-Identifizierungsnummer wird in einer Liste bzw. einem entsprechend eingerichteten Speicher abgespeichert. Die Liste kann vorzugsweise periodisch gelöscht oder überschrieben werden, um mit einer begrenzten Speicherkapazität auszukommen.

Der empfangene Ereignis-Bericht ER(N;Cs) wird daraufhin untersucht, ob es sich um einen Ur-Ereignis-Bericht ER(N;"") oder einen Nach-Ereignis-Bericht ER(N;Cs)handelt. Für den Fall, dass es sich um einen Ur-Ereignis-Bericht ER(N;"") handelt ist der Parameter C leer. Handelt es sich um einen Nach-Ereignis-Bericht ER(N;Cs), so ist der Parameter C mit den entsprechenden Nummern N der Ur-Ereignis-Berichte ER(N;"") belegt.

Falls es sich um einen vom Manager empfangenen Nach-Ereignis-Berichte ER(N;Cs) handelt, wird dieser im nächsten Schritt in einem Korrelationspuffer CB zwischengespeichert. Der Parameter C bzw. "Correlated Notifications" wird entsprechend ausgewertet. Vorzugsweise werden die darin enthaltenen Benachrichtigungs-Identifizierungsnummern N von zugeordneten Ur-Ereignis-Berichten ER(N;"") in einer Tabelle im Feld Liste(Cs) aufgenommen. Optional kann auch eine Datums- und/oder Zeitangabe des Speicherdatums mit abgespeichert werden.

Wenn im Normalfall, d.h. dem Fall der "Rückwärts-Korrelation", zumindest ein im Parameter "korrelierte Benachrichtigungen" C referenzierter Ur-Ereignis-Bericht ER(N;"") vom Manager schon vorher empfangen worden ist, d.h. zumindest ein Wert des Parameters C in der Liste der empfangenen N-Werte enthalten ist, dann ist die Korrelation problemlos möglich.

Der Nach-Ereignis-Bericht ER(N;Cs) wird dann zur Auswertung weitergeleitet und in dem Fall, dass keine weiteren Korrelationen auf andere Ur-Ereignis-Berichte ER(N;"") im Parameter C eingetragen sind, aus dem Korrelationspuffer CB entfernt. Sind eine oder mehrere weitere Korrelationen auf andere Ur-Ereignis-Berichte ER(N;"") im Parameter C eingetragen, zu denen noch keine N-Werte in der Liste der empfangenen N-Werte eingetragen sind, so bleibt der Nach-Ereignis-Bericht ER(N;Cs) im Korrelationsspeicher abgespeichert und lediglich der N-Wert zum ausgewerteten, d.h. schon vorher empfangenen (Ur)-Ereignis-Bericht ER(N;Cs) wird aus der Liste(Cs) gelöscht. D.h. wenn mindestens einer der im Parameter "Correlated Notifications" referenzierten Ur-Ereignis-Berichte ER(N;"") vom Manager noch nicht empfangen wurde, kann der Manager keine vollständige Korrelation durchführen und der Nach-Ereignis-Bericht ER(N;"") bleibt im Korrelationspuffer CB.

In dem Fall, dass kein zugeordneter Ur-Ereignis-Bericht ER(N;"") in der Liste mit empfangenen Parameter-N-Werten eingetragen ist, wird der Verfahrensablauf wieder zum Empfangen eines weiteren Ereignis-Berichtes ER(N;Cs) zurückgesetzt.

Falls es sich bei dem vom Manager empfangenen Ereignis-Bericht ER(N;Cs) um einen Ur-Ereignis-Bericht ER(N;"") mit unbenutztem Parameter "Correlated Notifications" C handelt, wird dieser direkt zur Auswertung weitergeleitet.

Nach der Auswertung wird überprüft, ob der Wert des Parameters Benachrichtigungs-Identifizierungsnummer N des ausgewerteten Ur-Ereignis-Berichtes ER(N;"") in der Liste(Cs) des Korrelationspuffers CB enthalten ist. D.h. der Manager sucht im Korrelationspuffer CB nach solchen Nach-Ereignis-Berichten ER(N;Cs), deren Parameter "Correlated Notifications" C eine Referenz auf den jetzigen Ur-Ereignis-Bericht ER(N;"") enthält.

Falls Nein gilt, so wird das Verfahren zum Empfangen eines weiteren Ereignis-Berichtes ER(N;Cs) zurückgesetzt.

Falls Ja gilt, wird der erste entsprechende Nach-Ereignis-Bericht ER(N;Cs) ausgelesen und ausgewertet. Außerdem wird der entsprechende N-Wert aus dem Listeneintrag Liste(Cs) zu dem ausgewerteten Nach-Ereignis-Bericht ER(N;Cs) gelöscht.

Daraufhin wir überprüft, ob in der Liste(Cs) dieses Nach-Ereignis-Berichtes ER(N;Cs) weitere Korrelations-Einträge vorhanden sind. Falls Nein, wird der gesamte Eintrag dieses Nach-Ereignis-Berichtes ER(N;Cs) aus dem Korrelationspuffer CB bzw. -speicher gelöscht. Mit anderen Worten wird der vom Manager empfangene Nach-Ereignis-Bericht ER(N;Cs) aus dem Korrelationspuffer CB erst dann entfernt, wenn er mit allen in seinem Parameter C angegebenen Ur-Ereignis-Berichten ER(N;Cs) korreliert werden konnte, d.h. wenn der Parameter C nach der zuletzt erfolgten Korrelation leer ist.

Daraufhin - oder im Ja-Fall direkt - wird zur Überprüfung zurückgesprungen, ob der Wert des Parameters Benachrichtigungs-Identifizierungsnummer N des zuvor ausgewerteten Ur-Ereignis-Berichtes ER(N;"") in der Liste(Cs) des Korrelationspuffers nochmals enthalten ist. Falls Ja gilt, wird die Schleife entsprechend erneut abgearbeitet, bis kein Korrelations-Eintrag zum momentanen Ur-Ereignis-Bericht ER(N;"") mehr in der Liste(Cs) des Korrelationspuffers enthalten ist. Letztendlich wird zum Einlesen eines neuen Ereignis-Berichtes ER(N;Cs) zurückgesprungen.

Zusammengefaßt heißt dies, dass alle gefundenen Nach-Ereignis-Berichte ER(N;Cs), deren Parameter "Correlated Notifications" C nur den Wert des Parameters "Notification Identifier" N des aktuellen Ur-Ereignis-Berichtes ER(N;"") enthalten, ausgewertet, an der Benutzeroberfläche entsprechend korreliert dargestellt und anschließend aus dem Korrelationspuffer CB entfernt werden. Mit anderen Worten, obwohl der Ur-Ereignis-Bericht ER(N;"") erst nach dem Nach-Ereignis-Bericht ER(N;Cs) vom Manager empfangen wurde, kann die Korrelation der entsprechenden Ereignisse im Telekommunikationsnetz korrekt ausgewertet werden.

Außerdem wird dann, wenn ein Nach-Ereignis-Bericht ER(N;Cs) gefunden wird, dessen Parameter C nicht nur den Wert des Parameters N des aktuellen Ur-Ereignis-Berichtes ER(N;""), sondern mindestens noch eine weitere Referenz enthält, für den Nach-Ereignis-Bericht ER(N;Cs) die Referenz auf den aktuellen Ur-Ereignis-Bericht ER(N;"") aus dem Parameter Correlated notifications entfernt. In diesem Fall bleibt der Nach-Ereignis-Bericht ER(N;Cs) im Korrelationspuffer CB zwischengespeichert.

Gemäß einer besonders bevorzugten Ausführungsform werden die Speicher für die N-Werte der empfangenen Ereignis-Berichte ER(N;Cs) und/oder der Korrelationsspeicher unabhängig von dem vorstehend beschriebenen Ablauf regelmäßig nach alten Ereignis-Berichten ER(N;Cs) durchsucht. Dazu wird, wie beispielsweise im Korrelationspuffer CB skizziert, beim Abspeichern eines Ereignis-Berichtes ER(N;Cs) der Speicherzeitpunkt mit abgespeichert. Wird bei einer Überprüfung festgestellt, dass dieses Datum für einen Ereignis-Bericht ER(i;j) älter als z.B. x Tage ist, wird dieser Ereignis-Bericht ER(N;Cs) aus dem Korrelationspuffer CB gelöscht. Der Vergleichswert x wird dabei so gesetzt, dass das Eintreffen von einem Ur-Ereignis-Bericht ER(N;"") zu dem gespeicherten Nach-Ereignis-Berichten ER(N;Cs) unwahrscheinlich ist und von einem Verlust auszugehen ist. In diesem Fall wird die Information des Nach-Ereignis-Berichtes ER(N;Cs) in bekannter Art und Weise behandelt, d.h. sie geht im Zweifelsfall verloren. Vorteilhafterweise kann die Kapazität der entsprechenden Speichereinheit beschränkt bleiben.

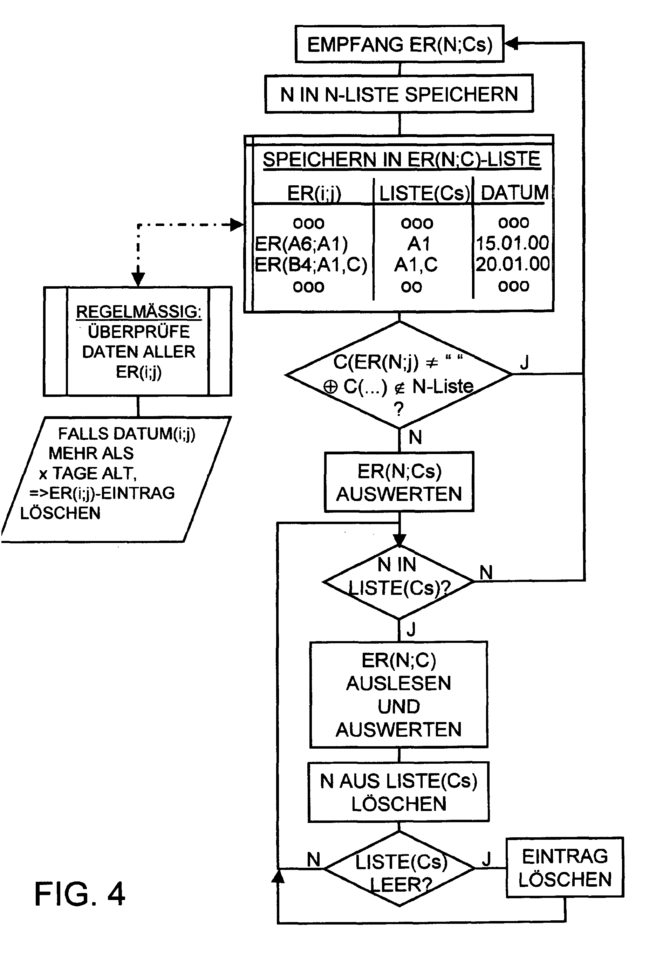

Bei einer modifizierten Ausführungsform, deren Verfahrensablauf in Fig. 4 skizziert ist, werden nach dem Empfang eines Ereignis-Berichtes ER(N;Cs) und dem Eintrag von dessen Benachrichtigungs-Identifizierungsnummer N in die N-Werte-Liste alle Ereignis-Berichte ER(N;Cs) in dem Korrelationspuffer CB bzw. -speicher abgespeichert.

Erst daraufhin wird der empfangene Ereignis-Bericht ER(N;Cs) untersucht, ob es sich um einen Ur-Ereignis-Bericht ER(N;"") oder einen Nach-Ereignis-Bericht ER(N;Cs)handelt.

In dem Fall, dass der eingelesene Ereignis-Bericht ER(N;Cs) ein Ur-Ereignis-Bericht ER(N;"") ist oder dass der eingelesene Ereignis-Bericht ER(N;Cs) ein Nach-Ereignis-Bericht ER(N;Cs) ist, in dessen Korrelations-Liste(Cs) zumindest ein Wert N eines zuvor empfangenen Ur-Ereignis-Berichtes ER(N;"") enthalten ist, wird mit der Auswertung fortgeschritten, wie sie vorstehend anhand Fig. 3 beschrieben ist.

Andernfalls, d.h. in dem Fall, dass der eingelesene Ereignis-Bericht ER(N;Cs) ein Nach-Ereignis-Bericht ER(N;Cs) ist, in dessen Korrelations-Liste(Cs) kein Wert N eines zuvor empfangenen Ur-Ereignis-Berichtes ER(N;"") enthalten ist, wird zum Empfangen eines weiteren Ereignis-Berichtes ER(N;Cs) zurückgesprungen.

Im wesentlichen unterscheiden sich die beiden Ausführungsformen dadurch, dass im zweiten Beispiel im Fall eines Nach-Ereignis-Berichtes ER(N;Cs) ein Abfrageschritt weniger durchgeführt werden muß. Dafür müssen jedoch auch die Ur-Ereignis-Berichte ER(N;"") abgespeichert werden.

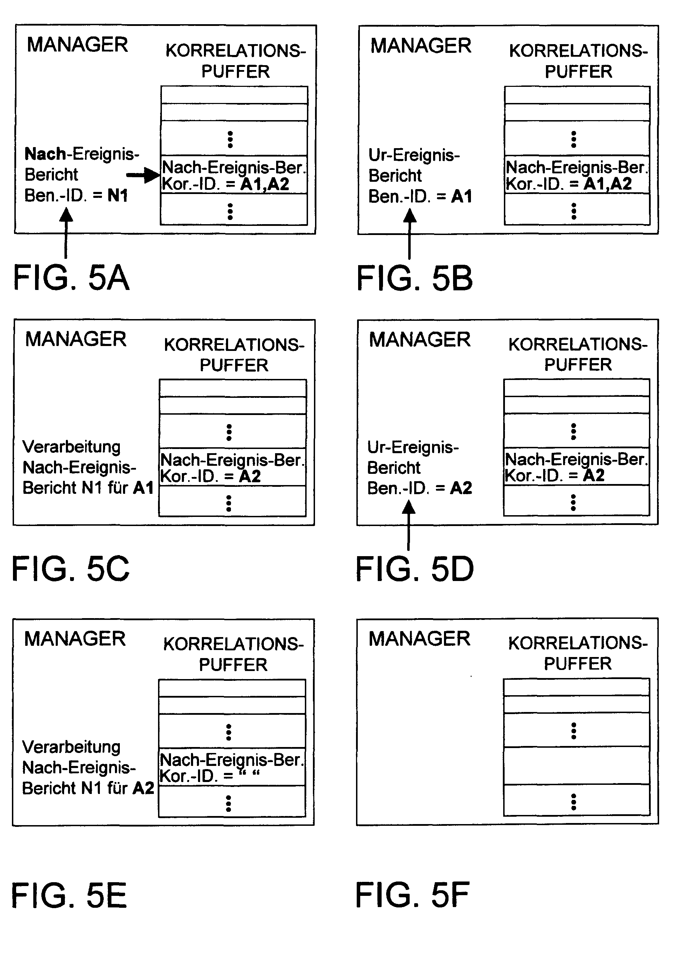

Anhand Fig. 5 wird nachfolgend beispielhaft eine Sequenz von empfangenen Ereignis-Berichten ER(N;Cs) im Fall der "Vorwärts-Korrelation" und deren Bearbeitung im Manager erläutert:
Im ersten Schritt (Fig. 5A) empfängt der Manager einen Nach-Ereignis-Bericht ER(N1;A1,A2) mit der eigenen Benachrichtigungs-Identifizierungsnummer N1 und den Korrelations-Benachrichtigungswerten bzw. Korrelations-Identifizierungsnummern A1 und A2. Dieser Nach-Ereignis-Bericht ER(N1;A1,A2) korreliert mit zwei noch nicht empfangenen Ur-Ereignis-Berichten ER(A1;"") und ER(A1;"") und wird daher im Korrelationspuffer CB und in dessen Korrelations-Liste(Cs) gespeichert, da zuvor weder ein Ur-Ereignis-Bericht ER(A1;"") noch ein Ur-Ereignis-Bericht ER(A2;"") empfangen wurde.

Nach dem späteren Eintreffen eines der beiden zugeordneten Ur-Ereignis-Berichte ER(A1;"") (Fig. 5B) erfolgt die erste Korrelation. Außerdem wird diese Korrelations-Information C = A1 aus der Korrelationsliste entfernt, so dass in dieser nur noch der Nach-Ereignis-Bericht ER(N1;A2) mit dem Korrelationsverweis "A2" bleibt (Fig. 5C).

Nach Empfang des zweiten Ur-Ereignis-Berichtes ER(A2;"") (Notification Identifier = A2) (Fig. 5D) erfolgt die zweite Korrelation und die zweite Korrelations-Information A2 wird aus dem Parameter "Correlated Notifications" entfernt, so dass dieser Parameter oder das entsprechende Listenfeld im Korrelationspuffer CB jetzt leer ist (Fig. 5E).

Der vollständig korrelierte Nach-Ereignis-Bericht ER(N1;"") wird abschließend aus dem Korrelationspuffer CB entfernt (Fig. 5F).

Dabei können zwischen dem Empfangen der vorstehend aufgeführten Ereignis-Berichte ER(i;j) natürlich andere Ereignis-Berichte ER(k;l) empfangen und verarbeitet werden.

Weiterhin müssen die Ereignis-Berichte ER(N;Cs) nicht zwingend zeitlich versetzt im Bereich des Managers empfangen werden. Ausschlaggebend ist in der Regel der Empfangszeitpunkt in der Managereinrichtung, die diese Berichte verarbeitet. Möglich ist daher z.B. das vorherige unbearbeitete Zwischenspeichern zeitlich gleichzeitig oder über verschiedene Eingänge eintreffender Ereignis-Berichte ER(N;Cs) in einem vorgelagerten Puffer. Im Fall des Eintreffens von Ereignis-Berichten ER(N;Cs) über verschiedene Eingänge kann bei entsprechender Priorisierung sogar ein zeitlich zuerst eintreffender Ereignis-Bericht ER(N;Cs) später verarbeitet werden als ein später eintreffender Ereignis-Bericht ER(N;Cs), wenn letzterer an einem Eingang mit höherer Priorität eintrifft.

## Patentansprüche

1. Verfahren zum Behandeln von Korrelationen zwischen Ereignis-Berichten in einem Kommunikationsnetz, insbesondere Funk-Kommunikationsnetz, bei dem
- in einem Schritt von einer Managereinrichtung ein erster Ereignis-Bericht (ER(A1;Cs)) empfangen wird,
- in einem späteren Schritt von der Managereinrichtung ein zweiter Ereignis-Bericht (ER(A2;Cs)) empfangen wird,
- wobei den Ereignis-Berichten (ER(Al;Cs),ER(A2;Cs)) vor dem Empfangen jeweils eine eindeutige Identifizierungskennzeichnung (A1 bzw. A2) zugewiesen wurde und den Ereignis-Berichten (ER(N;Cs)) optional jeweils eine oder mehrere Korrelations-Identifizierungskennzeichnung(en), insbesondere Identifizierungsnummer(n) (C), zugewiesen sein können;
- wobei die Korrelations-Identifizierungskennzeichnung(en) (C) eines Ereignis-Berichtes ER(N1;A1,A2) jeweils auf die Identifizierungskennzeichnung (C;A1 bzw. A2) eines Ereignis-Berichtes (ER(A1;""); ER(A1;"")) verweist(en), auf den/die der Ereignis-Bericht ER(N;Cs) mit der/den Korrelations-Identifizierungskennzeichnung(en) (C;A1 bzw. A2) bezogen ist,
**dadurch gekennzeichnet**,
- **dass** ein in der Managereinrichtung empfangener Ereignis-Bericht (ER (N1;A1,A2)), nachfolgend "Nach-Ereignis-Bericht", mit zumindest einer zugewiesenen Korrelations-Identifizierungskennzeichnung (A1), zu welcher der diesbezügliche Ereignis-Bericht (ER(A1;Cs),ER(A2;Cs)), nachfolgend "Vor-Ereignis-Bericht", noch nicht empfangen wurde, gespeichert wird.

2. Verfahren nach Anspruch 1, bei dem
die Managereinrichtung vor dem Speichern untersucht, ob der empfangene Ereignis-Bericht (ER(N;Cs)) ein Vor-Ereignis-Bericht (ER(N;"")) oder ein Nach-Ereignis-Bericht (ER(N;Cs)) ist.

3. Verfahren nach Anspruch 1 oder 2, bei dem
die Managereinrichtung empfangene Nach-Ereignis-Berichte (ER(N;Cs)) nachfolgend in einem Korrelationspuffer (CB) speichert.

4. Verfahren nach Anspruch 1, bei dem
die Managereinrichtung empfangene Vor- und Nach-Ereignis-Berichte (ER(N;Cs)) in einem Korrelationspuffer (CB) speichert.

5. Verfahren nach Anspruch 4, bei dem
die Managereinrichtung nachfolgend untersucht, ob der empfangene Ereignis-Bericht (ER(N;Cs)) ein Vor-Ereignis-Bericht (ER(N;"")) oder ein Nach-Ereignis-Bericht (ER(N;Cs)) ist.

6. Verfahren nach einem vorstehenden Anspruch, bei dem
die Managereinrichtung die zugewiesene Korrelations-Identifizierungskennzeichnung (A1) auswertet und insbesondere die darin enthaltenen Benachrichtigungs-Identifizierungskennzeichnungswerte (N) von zugeordneten Vor-Ereignis-Berichten (ER(N;"")) abspeichert (Liste(Cs)).

7. Verfahren nach einem vorstehenden Anspruch, bei dem
nachfolgend eine Auswertung erfolgt, falls der Ereignis-Bericht (ER(N;Cs)) ein Nach-Ereignis-Bericht (ER(N;Cs)), zu dem zumindest ein zugrundeliegender Vor-Ereignis-Bericht (ER(N;"")) vorliegt, oder ein Vor-Ereignis-Bericht (ER(N;"")) ist.

8. Verfahren nach Anspruch 7, bei dem
die Auswertung für den Nach-Ereignis-Bericht (ER(N;Cs)) zu allen zugrundeliegenden Vor-Ereignis-Berichten (ER(N;"")) erfolgt, die zuvor empfangen wurden.

9. Verfahren nach einem vorstehenden Anspruch, bei dem
ein gespeicherter Nach-Ereignis-Bericht (ER(N;Cs)) erst nach seiner Auswertung in Bezug auf alle Vor-Ereignis-Berichte (ER(A1;Cs),ER(A2;Cs)) gelöscht oder freigegeben wird, zu denen in seiner Korrelations-Identifizierungskennzeichnung (A1) Benachrichtigungs-Identifizierungskennzeichnungswerte (N) enthalten sind.

10. Verfahren nach einem vorstehenden Anspruch, bei dem
ein gespeicherter Nach-Ereignis-Bericht (ER(N;Cs)) in jedem Fall nach Ablauf einer vorbestimmbaren Speicherdauer freigegeben oder gelöscht wird.

11. Managementsystem zum Behandeln von Korrelationen zwischen Ereignis-Berichten in einem Funk-Kommunikationssystem, insbesondere zum Ausführen eines Verfahrens nach einem vorstehenden Anspruch, mit
- einer Managereinrichtung zum aufeinanderfolgenden Empfangen von Ereignis-Berichten (ER(N;Cs)),
- wobei die empfangenen Ereignis-Berichte
(ER(A1; Cs),ER(A2;Cs)) jeweils eine eindeutige Identifizierungskennzeichnung (A1 bzw. A2) aufweisen und die Ereignis-Berichte (ER(N;Cs)) optional jeweils eine oder mehrere Korrelations-Identifizierungskennzeichnung(en), insbesondere Identifizierungsnummer(n) (C), aufweisen können,
- wobei die Korrelations-Identifizierungskennzeichnung(en) (C) eines Ereignis-Berichtes ER(N1;A1,A2) jeweils auf die Identifizierungskennzeichnung (C;A1 bzw. A2) eines Ereignis-Berichtes (ER(A1;"");ER(A1;"")) verweist(en), auf den/die der Ereignis-Bericht ER(N;Cs) mit der/den Korrelations-Identifizierungskennzeichnung(en) (C;A1 bzw. A2) bezogen ist,
**dadurch gekennzeichnet**,
die Managereinrichtung mit einem Speicherbereich (CB) zum Abspeichern von zumindest einem in der Managereinrichtung empfangenen Ereignis-Bericht (ER(N1;A1,A2)), nachfolgend "Nach-Ereignis-Bericht", mit zumindest einer zugewiesenen Korrelations-Identifizierungskennzeichnung (A1), zu welcher der diesbezügliche Ereignis-Bericht (ER(A1;Cs),ER(A2;Cs)), nachfolgend "Vor-Ereignis-Bericht", noch nicht empfangen wurde, verbunden ist.
